# FASCICULE DE BREVET EUROPEEN

(11) **EP 3 143 505 B1**
(45) Date de publication et mention de la délivrance du brevet: **19.04.2023**
(21) Numéro de dépôt: 15724199.3
(22) Date de dépôt: 12.05.2015
(51) Int. Cl.: H04L 12/00, H04L 43/00

(54) **ARCHITECTURE DE CORRELATION D'EVENEMENTS POUR LA SURVEILLANCE DE SUPERCALCULATEUR**
ARCHITEKTUR ZUR KORRELATION VON EREIGNISSEN FÜR SUPERCOMPUTERÜBERWACHUNG
ARCHITECTURE FOR CORRELATING EVENTS FOR SUPERCOMPUTER SURVEILLANCE

(30) Priorité: 16.05.2014 FR 1454397
(43) Date de publication de la demande: 22.03.2017
(73) Titulaire: BULL SAS, 78340 Les Clayes-sous-Bois (FR); Commissariat à l'énergie atomique et aux énergies alternatives, 75015 Paris (FR)
(72) Inventeur: MIQUEE, Sébastien, 91290 Arpajon (FR); PEROTIN, Matthieu, 38000 Grenoble (FR)
(74) Mandataire: Novagraaf Technologies
(86) Numéro de dépôt international: PCT/EP2015/060531
(87) Numéro de publication internationale: WO 2015/173274

(56) Documents cités:
- WO-A2-02/23338
- FR-A1- 2 802 663
- US-A- 5 864 662
- SHEERS K R: "HP OPENVIEW EVENT CORRELATION SERVICES", HEWLETT-PACKARD JOURNAL, HEWLETT-PACKARD CO. PALO ALTO, US, vol. 47, no. 5, 1 octobre 1996 (1996-10-01), pages 31-42, XP000631664,

## Description

### DOMAINE DE L'INVENTION

L'invention est relative au domaine des centres de calcul, notamment des supercalculateurs. Elle concerne plus particulièrement la surveillance de ces supercalculateurs et des composants et équipements dont ils sont constitués.

### CONTEXTE DE L'INVENTION

Un supercalculateur (ou superordinateur) est un ordinateur conçu pour atteindre les plus hautes performances possibles avec les technologies connues lors de sa conception, en particulier en termes de vitesse de calcul. Les supercalculateurs tirent leur supériorité par rapport aux ordinateurs conventionnels à la fois de la technologie des composants utilisés et leur architecture.

Ainsi, les supercalculateurs ont des vitesses de plusieurs peta-flops et vont prochainement atteindre l'exa-flops. Le flops (pour « FLoating point Operations Per Second ») constitue une unité de mesure communément admise pour estimer la vitesse de traitement d'un calculateur.

Cette architecture peut notamment être en « pipeline » ou parallèle, afin d'exécuter plusieurs tâches simultanément. Quelle que soit l'architecture retenue, les supercalculateurs contiennent un très grand nombre d'équipements comportant eux-mêmes un grand nombre de composants (mémoires, microprocesseurs, etc.)

Typiquement, chaque équipement peut envoyer un message d'information vers un système de surveillance dès lors qu'un de ses composants ou lui-même change de statut. Ce type de message est communément appelé « événement ». Ce système de surveillance a pour mission de collecter et de traiter tous ces événements et doit réagir en conséquence.

Par exemple, lorsqu'un équipement envoie dans un laps de temps donné un grand nombre d'alertes de température, le service de surveillance peut devoir prendre la décision de l'éteindre.

Mais des alertes concernant un problème unique peuvent « remonter » de différents équipements (ou composants) et peuvent aussi être corrélées au niveau du système de surveillance. C'est par exemple le cas si l'ensemble des composants et/ou équipements situés en haut des armoires émettent des alertes de température, possiblement du fait d'un problème du circuit de refroidissement. Il est alors important de déclencher une alarme pour les administrateurs du supercalculateur.

Le service de surveillance peut également alimenter une base de données pour la mettre à jour avec ces informations ainsi collectées et corrélées. Cette base de données peut ensuite être utilisée pour des corrélations plus complexes, des calculs statistiques, etc.

Afin de gagner en puissance de calcul, les supercalculateurs deviennent de plus en plus complexes.

En conséquence, le nombre d'événements susceptibles d'être générés au sein du supercalculateur croit également. Ce point est d'autant plus crucial que certains problèmes (par exemple affectant une zone d'un supercalculateur, une armoire, etc.) peuvent générer des événements en chaîne sur un grand nombre d'équipements et composants simultanément ou dans un très court laps de temps.

Les solutions actuelles se basent sur un ou plusieurs moteurs de corrélation mais elles atteignent d'ores et déjà la limite de leurs possibilités. Certains systèmes de surveillance déployés sur le terrain montrent des retards de traitement de plusieurs heures, ce qui peut entraîner une prise de risque importante pour le calculateur(incident majeur non reporté à temps aux administrateurs, etc.)

On peut citer comme état de la technique le brevet US5864662, la demande WO02/23338, FR 2 802 663 et l'article « HP OpenView Event Corrélation Services » de K. R. Sheers, in Hewlett-Packard Journal, vol. 47, no. 5, 1996

Les recherches et les travaux visant à améliorer la situation portent essentiellement sur le moteur de corrélation lui-même, ou sur l'adjonction de modules complémentaires pour rendre la chaîne de traitement plus efficace. Toutefois, l'architecture conçue autour d'un moteur de corrélation n'est pas adaptée pour un tel passage à l'échelle. Il en résulte que seules des adaptations ad-hoc, sur le terrain, ont pu être localement entreprises pour minimiser au mieux les problèmes de l'inadéquation des systèmes de surveillance existants aux supercalculateurs.

### RESUME DE L'INVENTION

Le but de la présente invention est de fournir un système de surveillance palliant au moins partiellement les inconvénients précités. Plus particulièrement, l'invention vise à fournir un système de surveillance pouvant s'adapter à des supercalculateurs de configurations variées, notamment aux «petits» supercalculateurs, aux «gros» supercalculateurs et aux supercalculateurs de prochaines générations.

A cette fin, la présente invention propose un procédé et un système tel que défini par les revendications annexées.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un supercalculateur.
La figure 2 représente schématiquement un exemple de hiérarchie de module de corrélation, selon un mode de réalisation de l'invention.
La figure 3 représente schématiquement un exemple de module de corrélation, selon une mise en oeuvre de l'invention.

### DESCRIPTION DETAILLEE DE L'INVENTION

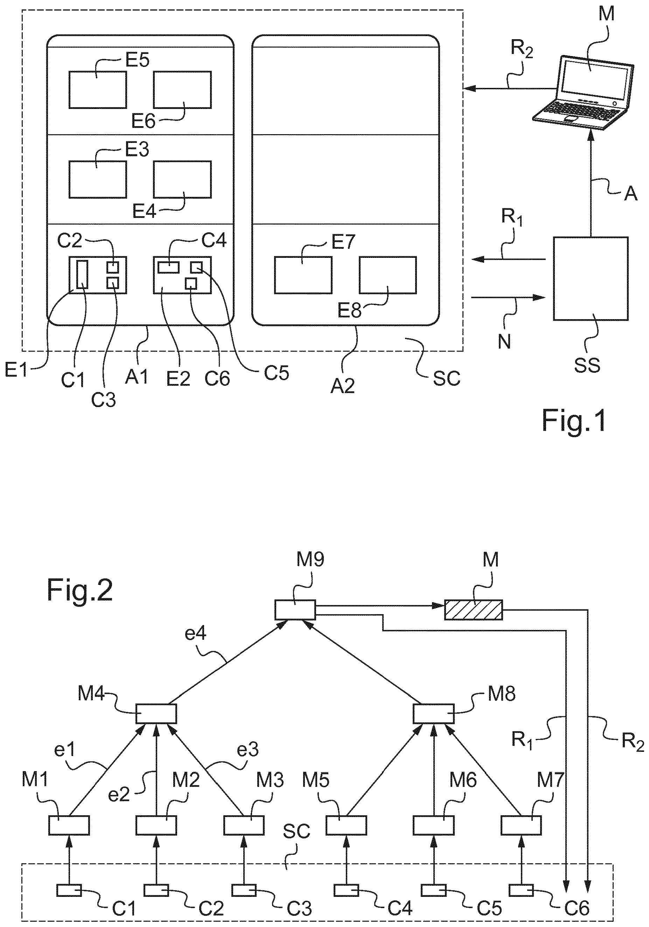

Ainsi qu'illustré sur la figure 1, un supercalculateur SC ou superordinateur peut être composé de plusieurs armoires ou « racks » A1, A2, dans lesquelles sont placés divers équipements E1, E2, E3... E8 dans des « tiroirs ». Chaque équipement est généralement constitué lui-même d'un grand nombre de composants électroniques, C1, C2, C3...C6.

Sur la figure 1, uniquement les composants internes des équipements E1 et E2 sont représentés, par soucis de clarté, mais il est évident que les autres équipements sont également constitués de composants. De même, le nombre de composants représentés et le nombre d'équipements dans chaque armoire sont indiqués sur la figure dans un pur but illustratif : un supercalculateur dispose d'un nombre bien plus important de composants et d'équipements.

Des capteurs sont associés aux composants. Il peut être prévu un ou plusieurs capteurs pour un même composant. Il peut aussi être prévu un même capteur pour plusieurs composants. Ainsi, différentes configurations d'association entre capteurs et composants peuvent être prévues.

Il peut également être prévu de disposer de capteurs au niveau des équipements, ou bien de former des groupes de composants ou d'équipements qui sont associés à un ou plusieurs capteurs.

Les capteurs peuvent être de différentes natures et capturer différents types d'information : température, taux d'humidité, consommation électrique... mais aussi des informations liées au traitement de données : erreurs matérielles, erreurs logicielles, trafic de données, etc.

Ces capteurs sont prévus pour générer des notifications. Ces notifications peuvent être des messages « INFORM » du protocole SNMP (Simple Network Management Protocol), par exemple défini par le STD 62 de l'IETF (Internet Engineering Task Force). Un message « INFORM » diffère d'un message « TRAP » en ce que le récepteur du message (ici le module) acquitte la bonne réception du message.

D'une façon générale, donc, le capteur peut envoyer ce message à partir d'un agent SNMP. Il est reçu par un « démon » SNMPTRAPD, puis traité par SMPTT et transmis à un démon Syslog. Le protocole Syslog sera ultérieurement décrit.

Les notifications N sont transmises au système de surveillance SS, qui peut les traiter afin d'éventuellement, fournir des alarmes A à un moniteur M et/ou déclencher une action correctrice R1 vers le supercalculateur SC. Une action correctrice R2 peut également être déclenchée par le moniteur M.

Le moniteur M peut être un terminal informatique tel qu'un ordinateur, une console, une tablette, un « smartphone », etc. qui permet d'offrir une interface homme-machine à des administrateurs humains. Plusieurs moniteurs peuvent être prévus.

Cette interface permet d'une part de présenter aux administrateurs les alarmes A provenant du système de surveillance, sous une forme brute, ou sous des formes plus évoluées (données statistiques, calculs d'évolution, etc.), et d'autre part aux administrateurs de déclencher des actions sur le système de surveillance SS et sur le supercalculateur SC. Ces actions peuvent être la recherche d'informations complémentaires mais aussi des actions correctrices R2.

Ces actions correctrices R1, R2, générées par le système de surveillance SS ou par le moniteur M visent à résoudre partiellement ou complètement le ou les problèmes associés à l'alarme A.

Cette résolution peut dans certaines situations corriger la source du problème : ainsi, dans le cas d'erreurs logiciels, une mise à jour du logiciel responsable peut être déclenchée et résoudre complètement le problème.

Mais il peut aussi s'agir de supprimer les symptômes du problème sans en supprimer véritablement la source : ainsi, en cas d'alarmes associées à une élévation importante de température dans une armoire ou une partie d'armoire, les composants ou équipements impactés peuvent être éteints. Il s'agit là d'éviter tout risque et dégât pour le supercalculateur.

Une alarme A est déclenchée par ailleurs pour les administrateurs qui pourront alors entreprendre les démarches nécessaires pour résoudre véritablement le problème (analyse de la cause, investigation sur le terrain, etc.). Il peut être possible également d'aiguiller les alarmes A vers un système d'administration informatique qui est adapté pour entreprendre certaines mesures de façon automatique.

Différentes mises en oeuvre sont donc possibles.

Le système de surveillance SS comprend une structure de modules M1, M2, M3...M9. Chaque module peut comprendre au moins un moteur de corrélation apte à corréler des événements entrants et à générer des événements sortants. Il peut en outre être prévu des modules ne comportant pas de moteur de corrélation au sein de la structure.

Dans l'exemple illustré par la figure 2, la structure est une hiérarchie.

Les événements sortants sont transmis aux modules du niveau hiérarchique supérieur au sein de la hiérarchie, pour lesquels ils sont considérés comme événements entrants.

Ainsi, sur la figure 2, le module M4 a comme événements entrants e1, e2, e3, qui sont des événements sortants pour, respectivement, les modules M1, M2, M3. De même, l'événement sortant e4 est considéré comme un événement entrant pour le module M9.

Ces modules peuvent être répartis de différentes façons sur une plateforme de traitement de données constituée de plusieurs machines matérielles ou virtuelles. Par exemple, un niveau hiérarchique peut être déployé sur une machine donnée, ou bien plusieurs niveaux peuvent être déployés sur une même machine ; ou bien encore plusieurs modules d'un même niveau hiérarchique peuvent être déployés sur plusieurs machines, etc.

La hiérarchie représentée en figure 2 comporte 3 niveaux hiérarchiques. Il s'agit bien évidemment là d'un exemple et un système de surveillance SS conforme à l'invention peut comporter un nombre arbitraire de niveaux hiérarchiques. Ce nombre de niveaux, ainsi que le nombre de modules pour chaque niveau et l'architecture générale de la hiérarchie peuvent être configurés par un utilisateur du système de surveillance SS.

Cette configuration peut être effectuée en fonction de la taille et de l'architecture du supercalculateur. Elle peut aussi être adaptée en cours de fonctionnement du supercalculateur, soit pour prendre en compte des évolutions de l'architecture de celui-ci, soit pour prendre en compte les résultats produits par le système de surveillance SS : ainsi, si l'on se rend compte, en cours de fonctionnement, que la majorité des événements provient d'une certaine zone, alors il peut être utile de déployer davantage de modules pour cette zone, soit par ajout de nouveaux modules, soit par réaffectation de modules existants.

Les capteurs sont prévus pour transmettre leurs notifications aux modules de plus bas niveau hiérarchique, en tant qu'événements entrant. Dans l'exemple de la figure2, le capteur associé au composant C1 transmet ses notifications au module M1, le capteur associé au composant C2 transmet ses notifications au module M2, et ainsi de suite jusqu'au capteur associé au composant C6 qui transmet ses notifications au module M7.

Dans ce mode de réalisation, les événements issus du niveau hiérarchique de plus haut niveau peuvent être considérés comme des alarmes, qui sont ensuite transmises au moniteur M. Ils peuvent également faire l'objet d'un traitement préalable afin de générer ces alarmes.

Dans l'exemple illustré sur la figure 2, la couche de plus haut niveau possède un unique module M9. Ce module M9 peut transmettre des alarmes A à un moniteur M, ainsi que des actions correctrices R1 vers le supercalculateur (non représenté sur la figure 2).

Il est toutefois possible d'imaginer des mises en oeuvre de l'invention avec plusieurs modules au sein de la couche de plus haut niveau.

Comme il a été dit précédemment, selon l'invention, chaque module comprend au moins un moteur de corrélation pour corréler des événements entrants et générer des événements sortants.

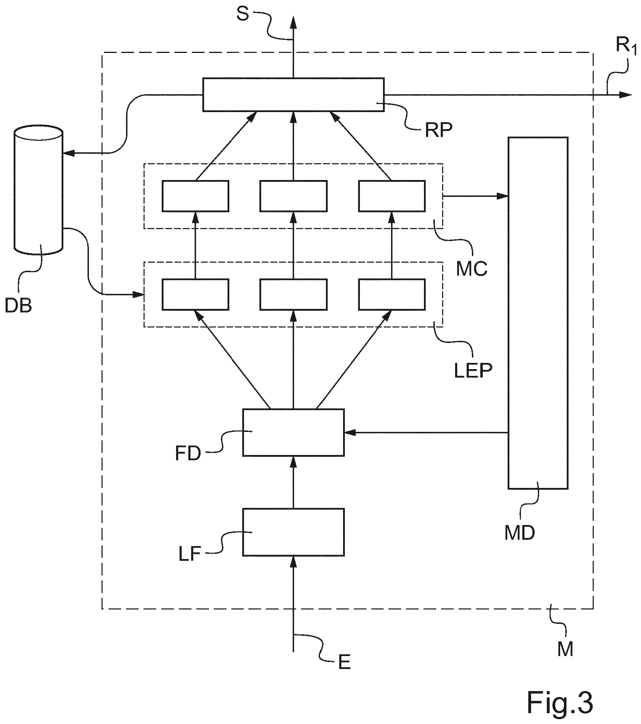

Ainsi qu'illustré par la figure 3, les modules peuvent en outre comporter d'autres fonctions qui peuvent être en prétraitement ou post-traitement par rapport au moteur de corrélation MC.

Chaque module de la hiérarchie peut comporter des fonctions différentes, et des mises en oeuvre différentes de chaque fonction.

Selon un mode de réalisation possible, les modules d'un même niveau hiérarchique sont semblables (mêmes fonctions, mêmes implémentations des fonctions), mais d'autres modes de réalisation sont possibles selon lesquels même au sein d'un même niveau hiérarchique, les modules peuvent disposer de fonctions différentes et, pour des fonctions communes, de mises en oeuvre différentes.

Les événements entrants E peuvent être des événements sortants d'un autre module (de niveau hiérarchique immédiatement inférieur), ou bien des notifications provenant d'un capteur.

Dans ce second cas, les notifications peuvent être conformes au protocole SNMP, et notamment être des messages « INFORM » ainsi que décrit précédemment. Elles peuvent être en outre conformes au protocole « Syslog » défini par le RFC 5424 de l'IETF.

Les événements transmis entre modules du système de surveillance peuvent être conformes à différents protocoles normalisés ou « propriétaires ». Ils peuvent également être conformes à ce même protocole « Syslog ».

Il peut en tout cas s'agir de communication directe entre les modules, sans mise en place de « file Syslog », de sorte que les communications en sont accélérées et que l'ajout de modules peut être configuré de façon très simple et immédiate par un administrateur.

L'événement entrant E peut tout d'abord être traité par un bloc fonctionnel de formatage LF. Cette fonction vise à réarranger et éventuellement compléter l'événement entrant, et notamment de préciser son niveau de criticité, de formater le contenu de l'événement selon des schémas prédéfinis, etc. Ce traitement permet de faciliter les traitements subséquents.

L'événement est ensuite transmis à un bloc fonctionnel de filtrage et répartition FD.

Cette fonction permet d'aiguiller les événements selon des critères prédéfinis vers des chemins différents au sein du module, notamment vers des moteurs de corrélation différents.

Les critères peuvent être divers. Par exemple, il peut s'agir de disposer de moteurs de corrélation spécialisés pour traiter des types donnés d'événements (par exemple, les événements relatifs à la température). Ainsi, les critères prédéfinis permettent d'aiguiller chaque événement vers le moteur de corrélation approprié.

Il peut être possible également d'effectuer de la répartition de charge en aiguillant les événements vers un moteur de corrélation moins chargé. La détermination du moteur de corrélation le moins chargé peut se faire de différentes façons : par une mesure de charge provenant périodiquement des moteurs de corrélation, par une estimation en fonction de statistiques sur les événements entrants préalablement répartis, etc. Un dispositif de monitoring MD peut être en charge d'établir des informations sur la charge des différents moteurs de corrélation et de les remonter vers le bloc fonctionnel de filtrage et aiguillage FD.

Le bloc fonctionnel de filtrage et répartition FD permet aussi de filtrer les événements entrants.

Ce filtrage peut avoir pour objectif de limiter les risques d'avalanche. En effet, certains dysfonctionnements du supercalculateur peuvent provoquer des réactions en chaine et/ou un très grand nombre de notifications provenant de composants. Par exemple, une panne du système de ventilation peut entraîner des notifications provenant du système de ventilation lui-même, puis un nombre grandissant de notifications provenant des composants de calcul à mesure que la température s'élève, etc. Ces phénomènes peuvent dans certains cas engorger complètement un système de surveillance, et donc empêcher ou ralentir la résolution du problème.

Le filtrage permet de sélectionner un nombre réduit d'événements entrants étant visiblement liés à une même cause, afin de décharger les moteurs de corrélation de la charge impliquée. Il permet en outre de ne garder en traitement que les événements ayant une certaine criticité. Ainsi, ceux représentant un niveau d'information inférieur peuvent être écartés afin de favoriser les événements plus prioritaires (ayant une criticité plus élevée).

Les événements entrants peuvent ensuite être transmis à un bloc fonctionnel de prétraitement LEP.

Ce bloc a pour but de compléter, le cas échéant, l'événement par des informations complémentaires. Ces informations complémentaires peuvent être recueillies de différentes façons et peuvent dépendre de l'implémentation du moteur de corrélation. Dans la mesure où les moteurs de corrélation contenus dans le module peuvent être spécialisés et donc faire l'objet de différentes implémentations, ces blocs fonctionnels de prétraitement LEP peuvent être adaptés à chaque moteur de corrélation. Aussi, dans l'exemple de la figure 3 sont représentés 3 moteurs de corrélation avec donc 3 blocs fonctionnels de prétraitement.

Puis, les événements sont transmis au moteur de corrélation MC correspondant au bloc fonctionnel de prétraitement LEP.

Comme il a été dit précédemment, chaque moteur de corrélation peut faire l'objet d'une implémentation différente. Cette implémentation peut être adaptée à une spécialisation du moteur de corrélation pour traiter un type d'événements particuliers. Le module MC peut aussi ne contenir qu'un unique moteur de corrélation.

Les moteurs de corrélation peuvent être répartis sur plusieurs machines matérielles, afin de paralléliser et répartir au mieux la charge de traitement. Il est également possible de déployer plusieurs modules M au sein d'une même machine matérielle ou virtuelle.

Ces choix d'architecture et de déploiement sont à décider par un administrateur du système de surveillance. Mais il est à noter qu'un tel système de surveillance conforme à l'invention n'est pas figé et peut être modifié a posteriori. Il peut être modifié du fait d'évolutions apportées au supercalculateur supervisé, mais aussi du fait d'informations sur l'historique de la supervision : l'administrateur peut ainsi se rendre compte que certains dysfonctionnements ne sont pas gérés de façon optimale et décider d'une modification du système de surveillance pour mieux les prendre en compte pour le futur.

Le(s) moteur(s) de corrélation transmettent ensuite l'événement vers un bloc de traitement des résultats RP. Ce bloc vise à élaborer et mettre en forme un événement sortant. Il peut ici être mis en place éventuellement une adaptation protocolaire afin de permettre une interopérabilité avec les modules ou d'autres dispositifs.

Ce bloc de traitement des résultats peut aussi être prévu pour transmettre une action correctrice R1 vers le supercalculateur supervisé, ainsi qu'il a été décrit préalablement.

Ce bloc de traitement des résultats peut aussi déclencher une mémorisation de l'événement dans une base de données qui peut être commune à l'ensemble des modules du système de surveillance. Cette base de données DB permet de garder un historique (« log ») des différents événements traités, afin de pouvoir s'y référer pour traiter des nouveaux événements (par le bloc fonctionnel de prétraitement LEP, notamment). Elle peut aussi être utilisée par un dispositif extérieur, par exemple le moniteur (décrit en référence avec la figure 2) pour effectuer des statistiques ou bien pour obtenir des informations plus précises sur une alarme reçue.

Les moteurs de corrélation peuvent mettre en oeuvre différentes technologies. La technologie mise en oeuvre peut dépendre de choix de l'administrateur en fonction de son expertise et de sa connaissance du supercalculateur. Elle peut aussi dépendre de considérations de coûts, ou de performance des moteurs sur le marché au moment du choix. Elle peut aussi être adaptée au type d'événements traités dans le cas d'une spécialiste des moteurs de corrélation.

Quelle que soit la technologie utilisée, une contrainte forte pour un moteur de corrélation est de permettre un résultat rapide et pertinent. La rapidité est importante afin de permettre une réaction rapide sur le problème détecté (de façon automatique ou manuelle). La pertinence implique de minimiser les fausses alertes et, surtout, de détecter un maximum d'événements pertinents, c'est-à-dire révélateurs d'un problème sur le supercalculateur supervisé.

De nombreuses technologies ont été développées pour mettre en oeuvre les moteurs de corrélation. On peut citer 3 grandes familles de technologies, chacune se déclinant en de nombreuses variantes et implémentations.

Une première famille de technologies est basée sur des règles (« rule-based systems »). Il s'agit probablement des technologies les plus courantes. Elles consistent à essayer de mettre en correspondance des événements entrants avec des règles, stockées dans une base de règles. En cas de mise en correspondance, la règle est inférée et des conclusions peuvent être établies. Ces conclusions peuvent consister en la transmission d'un nouvel événement, en le déclanchement d'une action correctrice, d'un traitement, etc.

Parmi les implémentations de ces technologies, on peut citer le système SEC (« Simple Event Correlator »), JRules, Kazimir, etc.

Une autre famille de technologies est appelée « codebook ». Il s'agit en quelque sorte d'une variante des technologies à base de règles, mais au lieu de considérer les événements individuellement, ceux-ci sont agrégés en vecteurs et les vecteurs sont comparés à des matrices contenant des signatures associées à différents problèmes possibles. Le but est de rechercher la cause première d'un ensemble d'événements (notifications) provenant du supercalculateur supervisé.

Une autre famille fait usage des techniques d'intelligence artificielle : il peut s'agir de réseaux bayésiens, de systèmes experts, etc. ou de combinaisons de ces techniques.

Un des avantages de l'invention est sa flexibilité.

Le système de surveillance SS est ainsi très ouvert et permet d'imaginer et mettre en place différentes structures, afin de potentiellement répondre à un maximum de besoins, principalement en fonction de la taille des supercalculateurs mais aussi des technologies requises pour leur supervision.

Du point de vue de l'implémentation, ce modèle peut être considéré comme une plateforme à « plugins ». Ainsi, les éléments peuvent être inter-changés, étendus... sans toucher au coeur de la plateforme. Les extensions peuvent ne se faire que sur des sous-ensembles précis et particuliers, si tel en est le besoin. De même, une architecture peut évoluer au fil du temps, en suivant les évolutions des supercalculateurs, sans à avoir à faire table rase de la solution actuelle. Les coûts de maintenance et d'évolution sont ainsi réduits.

## Revendications

1. Procédé de gestion d'un supercalculateur (SC) ayant une architecture en pipeline ou en parallèle et comportant un ensemble de composants (Cl, C2, C3...C6) afin d'exécuter plusieurs tâches simultanément, comprenant
- Une étape de génération de notifications (N) par des capteurs associés auxdits composants ;
- Une étape de traitement desdites notifications par une hiérarchie de modules, lesdites notifications formant des événements entrants pour les modules de plus bas niveau hiérarchique de ladite hiérarchie, et chaque module comprenant au moins un moteur de corrélation pour corréler des événements entrants et générer des événements sortants transmis aux modules de niveau supérieur au sein de ladite hiérarchie en tant qu'événements entrants,
ledit procédé étant **caractérisé en ce que** :
ladite étape de traitement comprenant un aiguillage des événements entrants vers des chemins différents au sein du module, chaque événement étant aiguillé vers un moteur de corrélation approprié parmi ledit au moins un moteur de corrélation, selon des critères prédéfinis ; et
le procédé comprend une étape de génération d'alarmes (A), à partir des événements sortants générés par les modules de plus haut niveau hiérarchique au sein de ladite hiérarchie, et
**en ce que** le nombre de niveaux, ainsi que le nombre de module pour chaque niveau et l'architecture générale est adapté en cours de fonctionnement en fonction d'un nombre d'événements générés dans une zone dudit supercalculateur.

2. Procédé selon la revendication précédente, comprenant en outre une étape de déclenchement d'une action correctrice (RI) transmise audit supercalculateur.

3. Procédé selon l'une des revendications précédentes, dans lequel lesdites alarmes sont transmises à un moniteur (M) disposant d'une interface homme-machine.

4. Procédé selon la revendication précédente, dans lequel une action correctrice (R2) est transmise par ledit moniteur (M) vers ledit supercalculateur (SC).

5. Programme d'ordinateur comprenant des instructions qui, une fois chargées sur un système de traitement de l'information, sont aptes à mettre en oeuvre le procédé selon l'une des revendications 1 à 4.

6. Système de surveillance (SS) d'un supercalculateur (SC) ayant une architecture en pipeline ou parallèle et comportant un ensemble de composants (Cl, C2, C3...C6) afin d'exécuter plusieurs tâches simultanément, et des capteurs associés auxdits composants générant des notifications (N) ; ledit système de surveillance comprenant une hiérarchie de modules, chaque module comprenant au moins un moteur de corrélation apte à corréler des événements entrants et générer des événements sortants transmis aux modules de niveau supérieur au sein de ladite hiérarchie, en tant qu'événements entrants,
ledit système étant **caractérisé en ce qu'**il comprend en outre un bloc fonctionnel de filtrage et aiguillage (FD) apte à aiguiller selon des critères prédéfinis vers des chemins différents au sein du module vers un moteur de corrélation approprié parmi ledit au moins un moteur de corrélation ; dans lequel lesdits capteurs sont prévus pour transmettre lesdites notifications à des modules de plus bas niveau hiérarchique de ladite hiérarchie en tant qu'événements entrants, et les modules de plus haut niveau hiérarchique au sein de ladite hiérarchie sont prévus pour générer des alarmes (A) et les transmettre à un moniteur (M), et **en ce que** le nombre de niveaux, ainsi que le nombre de module pour chaque niveau et l'architecture générale est adapté en cours de fonctionnement en fonction d'un nombre d'événements générés dans une zone dudit supercalculateur.

7. Système de surveillance selon la revendication 6, dans lequel les modules de plus haut niveau hiérarchique au sein de ladite hiérarchie sont prévus pour déclencher une action correctrice (RI) et la transmettre audit supercalculateur.

8. Système de surveillance selon l'une des revendications 6 à 7, dans lequel au moins certains desdits moteurs de corrélation sont mis en oeuvre par un système de règles.

9. Système de surveillance selon l'une des revendications 6 à 8, dans lequel lesdits modules sont prévus pour communiquer conformément au protocole « Syslog ».

10. Système de surveillance selon l'une des revendications 6 à 9, dans lequel lesdites notifications (N) sont adaptées à être transmises conformément au protocole SNMP.

11. Système comportant au moins un supercalculateur (SC) et un système de surveillance (S S) selon l'une des revendications 6 à 10.

12. Système selon la revendication précédente comportant en outre un moniteur (M), ledit moniteur étant prévu pour recevoir des alarmes (A) dudit système de surveillance (S S) et pour transmettre des actions correctrices (R2) vers ledit supercalculateur.

## Patentansprüche

1. Verfahren zum Verwalten eines Supercomputers (SC), der eine Pipeline- oder Parallelarchitektur vorweist und einen Satz von Komponenten (C1, C2, C3...C6) aufweist, um mehrere Aufgaben gleichzeitig auszuführen, umfassend
- einen Schritt zum Erzeugen von Benachrichtigungen (N) durch Sensoren, die den Komponenten zugeordnet sind;
- einen Schritt zum Verarbeiten der Benachrichtigungen durch eine Hierarchie von Modulen, wobei die Benachrichtigungen eingehende Ereignisse für die Module der niedrigsten Hierarchieebene der Hierarchie bilden, und jedes Modul umfassend mindestens eine Korrelationsmaschine zum Korrelieren eingehender Ereignisse und Erzeugen ausgehender Ereignisse, die an Module höherer Ebene innerhalb der Hierarchie als eingehende Ereignisse übertragen werden;
wobei das Verfahren **dadurch gekennzeichnet ist, dass:**
der Verarbeitungsschritt eine Verzweigung eingehender Ereignisse auf unterschiedliche Pfade innerhalb des Moduls umfasst, wobei jedes Ereignis gemäß vordefinierten Kriterien auf eine geeignete Korrelationsmaschine aus der mindestens einen Korrelationsmaschine verzweigt wird; und
das Verfahren einen Schritt zum Erzeugen von Alarmen (A) aus den ausgehenden Ereignissen umfasst, die durch die Module der höchsten hierarchischen Ebene innerhalb der Hierarchie erzeugt werden, und dadurch, dass die Anzahl der Ebenen sowie die Anzahl der Module für jede Ebene und die allgemeine Architektur während eines Betriebs in Abhängigkeit von einer Anzahl von Ereignissen, die in einer Zone des Supercomputers erzeugt werden, angepasst wird.

2. Verfahren nach dem vorstehenden Anspruch, ferner umfassend einen Schritt zum Auslösen einer Korrekturmaßnahme (RI), die an den Supercomputer übertragen wird.

3. Verfahren nach einem der vorstehenden Ansprüche, wobei die Alarme an einen Monitor (M), der über eine Mensch-Maschine-Schnittstelle verfügt, übertragen werden.

4. Verfahren nach dem vorstehenden Anspruch, wobei eine Korrekturmaßnahme (R2) durch den Monitor (M) zu dem Supercomputer (SC) übertragen wird.

5. Computerprogramm, umfassend Anweisungen, die nach einem Laden auf ein Informationsverarbeitungssystem in der Lage sind, das Verfahren nach einem der Ansprüche 1 bis 4 zu implementieren.

6. Überwachungssystem (SS) eines Supercomputers (SC), der eine Pipeline- oder Parallelarchitektur vorweist und einen Satz von Komponenten (C1, C2, C3...C6), um mehrere Aufgaben gleichzeitig auszuführen, und Sensoren, die den Benachrichtigungen (N) erzeugenden Komponenten zugeordnet sind, aufweist; das Überwachungssystem umfassend eine Hierarchie von Modulen, jedes Modul umfassend mindestens eine Korrelationsmaschine, die in der Lage ist, eingehende Ereignisse zu korrelieren und ausgehende Ereignisse, die an Module höherer Ebene innerhalb der Hierarchie als eingehende Ereignisse übertragen werden, zu erzeugen, wobei das System **dadurch gekennzeichnet ist, dass** es ferner einen Filter- und Abzweigungsrechenblock (FD) umfasst, der in der Lage ist, gemäß vordefinierten Kriterien zu unterschiedlichen Pfaden innerhalb des Moduls auf eine geeignete Korrelationsmaschine aus der mindestens einen Korrelationsmaschine zu verzweigen; wobei die Sensoren vorgesehen sind, um die Benachrichtigungen an Module der niedrigsten hierarchischen Ebene der Hierarchie als eingehende Ereignisse zu übertragen, und die Module der höchsten hierarchischen Ebene innerhalb der Hierarchie vorgesehen sind, um Alarme (A) zu erzeugen und sie an einen Monitor (M) zu übertragen, und dadurch, dass die Anzahl der Ebenen sowie die Anzahl der Module für jede Ebene und die allgemeine Architektur während des Betriebs in Abhängigkeit von einer Anzahl von Ereignissen, die in einer Zone des Supercomputers erzeugt werden, angepasst wird.

7. Überwachungssystem nach Anspruch 6, wobei die Module der höchsten hierarchischen Ebene innerhalb der Hierarchie vorgesehen sind, um eine Korrekturmaßnahme (RI) auszulösen und sie an den Supercomputer zu übertragen.

8. Überwachungssystem nach einem der Ansprüche 6 bis 7, wobei mindestens einige der Korrelationsmaschinen durch ein Regelsystem implementiert sind.

9. Überwachungssystem nach einem der Ansprüche 6 bis 8, wobei die Module vorgesehen sind, um gemäß dem "Syslog"-Protokoll zu kommunizieren.

10. Überwachungssystem nach einem der Ansprüche 6 bis 9, wobei die Benachrichtigungen (N) angepasst sind, um gemäß dem SNMP-Protokoll übertragen zu werden.

11. System, das mindestens einen Supercomputer (SC) und ein Überwachungssystem (S S) nach einem der Ansprüche 6 bis 10 aufweist.

12. System nach dem vorstehenden Anspruch, das ferner einen Monitor (M) aufweist, wobei der Monitor vorgesehen ist, um Alarme (A) von dem Überwachungssystem (S S) zu empfangen und Korrekturmaßnahmen (R2) an den Supercomputer zu übertragen.

## Claims

1. A method for managing a supercomputer (SC) having a parallel or pipeline architecture and comprising a set of components (C1, C2, C3 ... C6) in order to execute a plurality of tasks simultaneously, comprising
- a step of generating notifications (N) by sensors associated with said components;
- a step of processing said notifications by a hierarchy of modules, said notifications forming incoming events for the hierarchically lower-level modules of said hierarchy, and each module comprising at least one correlation engine for correlating incoming events and generating outgoing events transmitted to the higher-level modules within said hierarchy as incoming events;
said method being **characterized in that**:
said processing step
comprising a routing of incoming events to different paths within the module, each event being routed to an appropriate correlation engine among said at least one correlation engine, according to predefined criteria; and
the method comprises a step of generating alarms (A), based on the outgoing events generated by the hierarchically higher-level modules within said hierarchy, and **in that** the number of levels, as well as the number of modules for each level and the general architecture, is adapted during operation as a function of a number of events generated within a zone of said supercomputer.

2. The method according to the preceding claim, further comprising a step of triggering a corrective action (RI) transmitted to said supercomputer.

3. The method according to one of the preceding claims, wherein said alarms are transmitted to a monitor (M) having a human-machine interface.

4. The method according to the preceding claim, wherein a corrective action (R2) is transmitted by said monitor (M) to said supercomputer (SC).

5. A computer program comprising instructions which, once loaded onto an information processing system, are able to implement the method according to one of claims 1 to 4.

6. A monitoring system (SS) of a supercomputer (SC) having a parallel or pipeline architecture and comprising a set of components (C1, C2, C3 ... C6) in order to execute a plurality of tasks simultaneously, and sensors associated with said components generating notifications (N); said monitoring system comprising a hierarchy of modules, each module comprising at least one correlation engine capable of correlating incoming events and generating outgoing events transmitted to the higher-level modules within said hierarchy as incoming events, said system being **characterized in that** it further comprises a filtering and routing functional block (FD) capable of routing, according to predefined criteria, to different paths within the module toward a suitable correlation engine among said at least one correlation engine; wherein said sensors are designed to transmit said notifications to hierarchically lower-level modules of said hierarchy as incoming events, and the hierarchically higher-level modules within said hierarchy are designed to generate alarms (A) and transmit them to a monitor (M), and **in that** the number of levels, as well as the number of modules for each level and the general architecture, is adapted during operation as a function of a number of events generated within a zone of said supercomputer.

7. The monitoring system according to claim 6, wherein the hierarchically higher-level modules within said hierarchy are designed to trigger a corrective action (RI) and to transmit it to said supercomputer.

8. The monitoring system according to one of claims 6 to 7, wherein at least some of said correlation engines are implemented by a system of rules.

9. The monitoring system according to one of claims 6 to 8, wherein said modules are designed to communicate in accordance with the "Syslog" protocol.

10. The monitoring system according to one of claims 6 to 9, wherein said notifications (N) are adapted to be transmitted in accordance with the SNMP protocol.

11. A system comprising at least one supercomputer (SC) and a monitoring system (SS) according to one of claims 6 to 10.

12. The system according to the preceding claim, further comprising a monitor (M), said monitor being designed to receive alarms (A) from said monitoring system (SS) and to transmit corrective actions (R2) to said supercomputer.
